(19) Europäisches Patentamt / European Patent Office / Office européen des brevets

(11) **EP 2 518 122 A1**

(12) **EUROPEAN PATENT APPLICATION**
published in accordance with Art. 153(4) EPC

(43) Date of publication:
**31.10.2012 Bulletin 2012/44**

(21) Application number: **10839382.8**

(22) Date of filing: **21.12.2010**

(51) Int Cl.:
*C09J 133/06* (2006.01)     *C08F 2/46* (2006.01)
*C08F 220/18* (2006.01)     *C08F 226/06* (2006.01)
*C08J 7/06* (2006.01)        *C09J 7/02* (2006.01)
*C09J 139/04* (2006.01)

(86) International application number:
**PCT/JP2010/072971**

(87) International publication number:
**WO 2011/078152 (30.06.2011 Gazette 2011/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.12.2009 JP 2009294491**

(71) Applicant: **Nitto Denko Corporation
Ibaraki-shi, Osaka 567-8680 (JP)**

(72) Inventors:
• **NIWA, Masahito
  Ibaraki-shi
  Osaka 567-8680 (JP)**
• **OKAMOTO, Masayuki
  Ibaraki-shi
  Osaka 567-8680 (JP)**

(74) Representative: **Grünecker, Kinkeldey,
Stockmair & Schwanhäusser
Leopoldstrasse 4
80802 München (DE)**

(54) **PRESSURE-SENSITIVE ADHESIVE COMPOSITION AND PRESSURE-SENSITIVE ADHESIVE SHEET**

(57)     Provided are a PSA composition capable of forming a PSA having an excellent high-temperature cohesive strength and low-temperature adhesive strength with low corrosiveness to metal; and a PSA sheet formed of the composition. The PSA composition comprises a copolymerization product of a monomer mixture having a composition containing at least an alkyl (meth)acrylate having an alkyl group with 1 to 20 carbon atoms and an oxazoline-group-containing unsaturated monomer (monomer m2). The amount of monomer m2 relative to all monomer components is 1 to 70 % by weight.

EP 2 518 122 A1

**Description**

[Technical Field]

The present invention relates to an acrylic pressure-sensitive adhesive composition and a pressure-sensitive adhesive sheet. This application claims priority to Japanese Patent Application No. 2009-294491 filed on December 25th, 2009 and the entire contents thereof are incorporated herein by reference.

[Background Art]

In recent years, pressure-sensitive adhesive (PSA) sheets have been used in various occasions such as fixation (attachment), shipping, protection, decoration and so on of objects. Representative examples of these PSA sheets include those with a PSA layer formed by using an acrylic PSA composition. Such an acrylic PSA composition can typically form a PSA layer containing an acrylic polymer as the base polymer (primary PSA component). Technical literatures regarding acrylic PSA compositions include Patent Documents 1 to 3.

[Citation List]

[Patent Literatures]

Patent Document 1: Japanese Patent Application Publication No. H5-117593
Patent Document 2: Japanese Patent Application Publication No. 2003-183596
Patent Document 3: Japanese Patent Application Publication No. 2003-165964

[Summary of Invention]

[Technical Problem]

When storing an object such as a member containing an interface bonded with a PSA sheet (typically, a PSA sheet that is adhesive on both sides) in an environment at an elevated temperature (e.g., 80 °C or above) for a long time, in order to prevent the bonded interface from peeling off, it is desirable to use a PSA sheet with highly a cohesive PSA layer. Especially, when the bonded interface is kept under conditions of a certain amount of loading (loading in a shear direction) in an environment at an elevated temperature for a long time, a high cohesive strength is required. On the other hand, when the cohesive strength is increased, the tackiness (stickiness) generally decreases and the adhesive strength at a low temperature environment is likely to turn insufficient. However, when the member is held over a wide range of temperature from low to high (e.g., when the adherend is a part included in a vehicle or the like), an excellent cohesive strength at an elevated temperature (a cohesive strength under conditions of loading in a high-temperature environment) and a good adhesive strength at a low temperature (adhesive strength in a low-temperature environment) are required at the same time.

In a PSA layer containing an acrylic polymer as the base polymer, making the polymer to have a copolymer composition with a relatively high proportion of a monomer containing an acidic group such as carboxyl group or the like (e.g., acrylic acid) can be an effective way to increase the cohesive strength of the PSA layer. In general, however, a monomer with a carboxyl group tends to drastically degrade the adhesive properties at a low temperature (tackiness and adhesive strength in a low-temperature environment) with increasing of the used amount thereof Therefore, it is difficult to bring about high levels of cohesive strength (e.g., high-temperature cohesive strength) and low-temperature properties simply by adjusting the amount of the acidic-group-containing monomer. In addition, since a monomer containing a carboxyl group can cause corrosion of metal, it is desirable to avoid the use of the monomer in accordance with the application purpose of a PSA sheet. Thus, it is useful to have a PSA sheet having adhesive properties as described above without essential use of a carboxyl-group-containing monomer.

An objective of the present invention is to provide an acrylic PSA composition capable of forming a PSA layer that can exhibit high levels of high-temperature cohesive strength and low-temperature adhesive strength in a good balance. Another objective of this invention is to provide a PSA sheet comprising such a PSA layer. Another related objective is to provide a method for producing such a PSA sheet.

[Solution to Problem]

The PSA composition provided by the present invention comprises at least a copolymerization product of a monomer mixture. The monomer mixture comprises, as monomer m1, an alkyl (meth)acrylate represented by the following formula (I):

$$CH_2=C(R^1)COOR^2 \qquad (I)$$

wherein $R^1$ is a hydrogen atom or a methyl group and $R^2$ is an alkyl group having 1 to 20 carbon atoms; and, as monomer m2, an unsaturated monomer containing an oxazoline group. In a preferred embodiment, the monomer mixture is essentially free of carboxyl-group-containing monomers. The amount of monomer m2 contained in the monomer mixture is 1 to 70 % by weight of the total monomer components. The copolymerization product may be a completely polymerized product or a partially polymerized product of the monomer mixture. In this description, a completely polymerized product means a product obtained by copolymerizing the monomer mixture to a nearly full extent (i.e., copolymerizing almost all the monomer components). A partially polymerized product means a product obtained by copolymerizing a portion of the monomer mixture. The partially polymerized product typically contains a polymer formed by partial copolymerization of some monomers in the monomer mixture (may contain a polymer of a relatively low polymerization degree; for instance, may contain a polymer (sometimes referred to as an oligomer) having a weight average molecular weight of about $1 \times 10^4$ or less) as well as unreacted monomers. The copolymerization product may comprise, in addition to the monomers and/or a copolymer thereof, other components (a polymerization initiator, a solvent, a disperse medium, etc.) used in the copolymerization reaction. An unsaturated monomer herein means a monomer with an ethylenically unsaturated group such as vinyl group, allyl group and the like.

According to such a PSA composition, since the monomer mixture comprises an alkyl (meth)acrylate and the prescribed amount of an oxazoline-group-containing monomer, can be formed a PSA layer that can exhibit high levels of high-temperature cohesive strength and low-temperature adhesive strength at the same time in a good balance. Such an effect can be preferably produced even when the amount of a carboxyl-group-containing monomer in the monomer mixture is relatively small or the monomer mixture has a composition essentially free of carboxyl-group-containing monomers. This enables formation of a PSA layer less corrosive to metal. A PSA layer can be formed by applying (coating) the PSA composition onto a substrate and curing it by an appropriate process as needed. A PSA (which can be a part of a PSA sheet) formed of a PSA composition disclosed herein may exhibit a damping property when used to a structure or an equipment to be an vibration source. Such a PSA composition is preferred in terms of reducing vibrations and noise occurring from a vehicle (an automobile or the like), an air-conditioning device or the like. Damping property herein means a property to absorb vibrations (a property to reduce the amplitude of vibration in a solid surface by converting the vibration energy of the solid surface to thermal energy).

Preferable examples of monomer m2 include 2-vinyl-2-oxazoline.

The monomer mixture preferably has a monomer composition such that the copolymer that can be produced from the mixture (i.e., the copolymer whose copolymer composition is equivalent to the monomer composition of the mixture) has a glass-transition temperature Tg of about -10 °C or below (typically, about -70 °C to -10 °C). The Tg value of the copolymer can be calculated by the Fox equation based on the weight fractions of the respective monomer components (m1, m2 and other optional monomer components) and the Tg values (Kelvin; K) of their respective homopolymers. From such a PSA composition, can be formed a PSA layer that can exhibit, for instance, good adhesive characteristics (tackiness, low-temperature adhesive strength) at a relatively low temperature (for example, about 0 to 10 °C).

In an embodiment, the PSA composition further comprises a crosslinking agent. Such an PSA composition can form a PSA (which can be a PSA layer of a PSA sheet; hereinafter the same shall apply) with a better balance of adhesive characteristics (high-temperature cohesive strength, low-temperature adhesive strength and so on).

As another aspect, the present invention provides a PSA sheet having a PSA layer formed of a PSA composition disclosed herein. Because such a PSA sheet comprises a PSA layer formed of the aforementioned PSA composition, it can exhibit an excellent high-temperature cohesive strength and low-temperature adhesive strength (in a preferred embodiment, low corrosiveness to metal as well). In a preferred embodiment, the PSA sheet disclosed herein may show an excellent damping property in addition to these characteristics.

As yet another aspect, the present invention provides a method for producing a PSA sheet. This method comprises (A) preparing a PSA composition by subjecting a monomer mixture to copolymerization reaction. Herein, the monomer mixture comprises an alkyl (meth)acrylate (monomer m1) represented by the following formula (I): $CH_2=C(R^1)COOR^2$ (wherein $R^1$ is a hydrogen atom or a methyl group and $R^2$ is an alkyl group having 1 to 20 carbon atoms); and an oxazoline-group-containing unsaturated monomer (monomer m2). The amount of monomer m2 accounts for 1 to 70 % by weight of all the monomer components. This method comprises (B) applying the PSA composition to a substrate. The method further comprises (C) subjecting the applied composition to a curing treatment to form a PSA layer. In a preferred embodiment, the monomer mixture is essentially free of carboxyl-group-containing monomers.

In the procedure (A), the copolymerization reaction can be carried out only for an initial stage (i.e., partially) with many monomers remaining unreacted, or can be carried out through the final stage (i.e., nearly completely) with few monomers remaining unreacted. When necessary, removal or addition of a solvent, addition of a crosslinking agent and so on can be carried out. In the procedure (C), the curing treatment after the composition coating can be drying (heating), crosslinking, successive copolymerization reaction, aging and so on. One, two or more of these processes can be performed. Two or more processes (e.g., crosslinking and drying) can be carried out simultaneously or in multiple steps. For instance, the curing treatment herein includes a simple drying process (heating process, etc.) as well. According to such a method, can be efficiently produced a PSA sheet excellent in adhesive characteristics (high-temperature cohesive strength , low-temperature adhesive strength and so on) (in a preferred embodiment, better yet low in corrosiveness to metal).

In an embodiment of the PSA sheet production method disclosed herein, at the procedure (A), the copolymerization reaction is carried out partially by photopolymerization. Such a method can be preferably employed when the PSA composition is free of solvents. It can be preferably employed also when a thick PSA layer is to be formed.

In an embodiment of the PSA sheet production method disclosed herein, at the procedure (A), the copolymerization reaction is carried out by solution polymerization. Such a method can be preferably employed when the PSA composition is a solvent-based.

[Brief Description of Drawings]

Figure 1 shows a cross-sectional diagram schematically illustrating a configuration of the PSA sheet according to the present invention.
Figure 2 shows a cross-sectional diagram schematically illustrating another configuration of the PSA sheet according to the present invention.
Figure 3 shows a cross-sectional diagram schematically illustrating another configuration of the PSA sheet according to the present invention.
Figure 4 shows a cross-sectional diagram schematically illustrating another configuration of the PSA sheet according to the present invention.
Figure 5 shows a cross-sectional diagram schematically illustrating another configuration of the PSA sheet according to the present invention.
Figure 6 shows a cross-sectional diagram schematically illustrating another configuration of the PSA sheet according to the present invention.
Figure 7 shows a perspective diagram schematically illustrating the test piece configuration used in the cantilever beam test.

[Description of Embodiments]

Preferred embodiments of the present invention are described below. Matters necessary to practice this invention other than those specifically referred to in this description may be understood as design matters based on the conventional art in the pertinent field for a person of ordinary skills in the art. The present invention can be practiced based on the contents disclosed in this description and common technical knowledge in the subject field.

The PSA composition disclosed herein comprises a copolymerization product of a monomer mixture comprising at least monomers m1 and m2 as essential components.

Monomer m1 comprises one, two or more kinds of alkyl (meth)acrylates ((meth)acrylic acid esters of alkyl alcohols) represented by the formula (I) below. Herein, "(meth)acrylic acid" conceptually includes acrylic acid and methacrylic acid.

$$CH_2=C(R^1)COOR^2 \qquad (I)$$

In the formula (I), $R^1$ is a hydrogen atom or a methyl group. $R^2$ in the formula (I) is an alkyl group having 1 to 20 carbons. The alkyl group may be linear or branched. Examples of the alkyl (meth)acrylates represented by Formula (I) include methyl (meth)acrylate, ethyl (meth)acrylate, n-propyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate and the like. Of these, an alkyl (meth)acrylate with $R^2$ being an alkyl group having 2 to 14 carbons (hereinafter, a range of number of carbons like this may be shown as "$C_{2-14}$") is preferable and an alkyl (meth)acrylate with $R^2$ being an $C_{2-10}$ alkyl group (e.g., n-butyl group, 2-ethyl hexyl group, or the like) is more preferable.

In a preferred embodiment, of the total amount of monomer m1, about 70 % by weight or greater (more preferably, 90 % by weight or greater) is an alkyl (meth)acrylate with $R^2$ in the formula (I) being a $C_{2-10}$ (more preferably, $C_{4-8}$) alkyl group. All the monomer m1 may consist essentially of a $C_{2-10}$ alkyl (more preferably, $C_{4-8}$ alkyl) (meth)acrylate. The monomer mixture may comprise, as monomer m1, for example, solely n-butyl acrylate (BA), solely 2-ethylhexyl acrylate (2EHA), both BA and 2EHA, or the like.

The amount of monomer m1 (when two or more kinds of alkyl (meth)acrylates are contained, their total amount) contained in the monomer mixture can be about 30 to 90 % by weight (preferably about 40 to 80 % by weight, more preferably about 50 to 75 % by weight) of all the monomer components. When the amount of monomer m1 is too small in the PSA composition, a PSA layer formed of the composition may tend to have insufficient adhesive properties (tackiness, especially low-temperature adhesive strength). When it is excessively higher than the above range, because the amount of monomer m2 to be contained in the monomer mixture becomes small, it may be difficult to obtain desired adhesive characteristics (high-temperature cohesive strength, low-temperature adhesive strength) in a good balance. Note that the composition of the monomer mixture (monomer composition), in typical, corresponds approximately to the copolymerization ratio (copolymer composition) of the copolymer obtained by copolymerization of the mixture.

The monomer mixture comprises, in addition to monomer m1, as monomer m2, one, two ore more kinds of oxazoline-group-containing unsaturated monomers. For instance, can be used an oxazoline having an ethylenically unsaturated group such as vinyl group, allyl group (propenyl group) and the like. Examples of such unsaturated monomers include 2-vinyl-2-oxazoline, 2-propenyl-2-oxazoline, 2-isopropenyl-2-oxazoline, 2-vinyl-4,4-dimethyl-2-oxazoline-5-on, 4-methyl-2-vinyl-2-oxazoline, 5-methyl-2-vinyl-2-oxazoline, 5-decyl-2-vinyl-2-oxazoline, 2-(4-nitro-phenyl)-5-vinyl-2-oxazoline, 3-vinyl-4-oxazoline-2-on, 2-(4-vinylphenyl)-4,4-dimethyl-oxazoline, 2,2-(4-vinyl-phenyl)-2-oxazoline, 2-(4-vinyl-styryl)-4,4-dimethyl-2-oxazoline, 2-($\alpha$-methyl-4-vinylstyryl)-4,4-dimethyl-2-oxazoline, 4-vinyl-5,5-dimethyl-2-oxazoline, 5-vinyl-2-oxazoline-2-carboxylic acid t-butyl ester, 5-vinyl-2-oxazoline-2-carboxylic acid methyl ester and the like. Based on the polymerizability and availability, 2-vinyl-2-oxazoline is an especially preferable example of monomer m2.

Monomer m2 may function as a component that contributes to a greater cohesive strength of the PSA by the intermolecular interactions. It may also function as a component that contributes to provide a damping characteristic to the PSA. The amount of monomer m2 contained in the monomer mixture can be about 1 to 70 % by weight (preferably about 3 to 60 % by weight, more preferably about 5 to 50 % by weight) of all the monomer components. When the amount of monomer m2 is too small, the resulting PSA (PSA layer) may be insufficient in the cohesive strength (especially high-temperature cohesive strength). When too large, it may result in an insufficient tackiness thereby decreasing the low-temperature adhesive strength. In view of providing a damping property to the formed PSA, the amount of monomer m2 is preferably 10 % by weight or greater and is more preferably 20 % by weight or greater. For a balance with the adhesive properties, it can be, for example, about 25 to 50 % by weight.

The art disclosed herein can be preferably practiced in an embodiment wherein the carboxyl-group-containing monomer content of the monomer mixture is relatively low (e.g. of all the monomer components, at less than 3 % by weight, preferably at less than 1 % by weight, or more preferably at less than 0.5 % by weight, for instance, at less than 0.3 % by weight). In a preferred embodiment, the monomer mixture is essentially free of carboxyl-group-containing monomers. "Carboxyl-group-containing monomer" herein means a vinyl monomer (ethylenically unsaturated monomer) having at least one carboxyl group (which may be anhydrous) per molecule. Examples of the carboxyl-group-containing monomer include ethylenically unsaturated monocarboxylic acids such as (meth)acrylic acid, crotonic acid and the like; ethylenically unsaturated dicarboxylic acids such as maleic acid, itaconic acid, citraconic acid and the like; ethylenically unsaturated dicarboxylic acid anhydrides such as maleic anhydride, itaconic anhydride and the like; and so on. That the monomer mixture "essentially free of" carboxyl-group-containing monomers means that the monomer mixture contains no carboxyl-group-containing monomers at all or the total amount contained therein is equal to or less than 0.1 % by weight of all the monomer components.

Besides essentially free of carboxyl-group-containing monomers, it is preferable that the monomer mixture is essentially free of monomer having an acidic group (sulfo group, phosphate group or the like) that is other than a carboxyl group. In other words, it is preferable that it does not contain any carboxyl-group-containing monomers or any other acidic-group-containing monomers (meaning to encompass carboxyl-group-containing monomers and the other acidic-group-containing monomers) at all, or their total amount is equal to or less than 0.1 % by weight of all the monomer components. Such a PSA composition may form a PSA layer that, when adhered directly on a metal surface, corroding of the metal surface is suppressed to a greater extent (i.e., the corrosiveness to a metal surface is suppressed to a greater extent).

The monomer mixture may comprise, in addition to monomers m1 and m2 as essential components, the other monomers as optional components. These optional monomers can be one, two or more kinds of monomers selected from the monomers that do not correspond to monomer m1 or m2. Examples include hydroxyalkyl (meth)acrylates such as 4-hydroxybutyl (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, [4-(hydroxymethyl)cyclohexyl] methyl acrylate and the like; N-vinyl-lactams such as N-vinyl-2-pyrrolidone, N-vinyl-2-piperidone, N-vinyl-3-morpholinone, N-vinyl-2-caprolactam, N-vinyl-1,3-oxazine-2-on, N-vinyl-3,5-morpholinedion and the like; N-(meth)acryloyl-group-containing monomers such as N-(meth)acryloyl morpholine, N-(meth)acryloyl pyrrolidine and the like; amino-group-containing (meth)acrylates such as aminoethyl (meth)acrylate, N,N-dimethylaminoethyl (meth)acrylate, N,N-dimethyl-aminopropyl (meth)acrylate and the like; N,N-dialkyl acrylamides such as N,N-diethylacrylamide, N,N-dimethylacrylamide and the like; vinyl esters such as vinyl acetate, vinyl propionate and the like; aliphatic (meth)acrylates; imide-group-containing monomers; cyano-group-containing monomers such as acrylonitrile, methacrylonitrile and the like; alkyl (meth)acrylates not corresponding to monomer m1 (i.e., having an alkyl group with at least 21 carbons); and so on. These optional monomers may also contribute to a greater cohesive strength. For instance, when obtaining a completely polymerized product as the copolymerization product of the monomer mixture, a hydroxyl-group-containing monomer can be preferably used as an optional monomer.

The total amount of optional monomers contained in the monomer mixture is preferably equal to or less than about 20 parts by weight (more preferably equal to or less than about 15 parts by weight) relative to a total of 100 parts by weight of monomers m1 and m2 combined. The monomer mixture may have a composition containing essentially no optional monomers. When the amount of optional monomers is too large, the complex adhesive characteristics as described above may not be achieved in a good balance.

The monomer mixture in the art disclosed herein preferably has a monomer composition such that, with respect to the copolymer having a copolymer composition that is equivalent to the monomer composition of the mixture, the Tg value (theoretical value) calculated by the Fox equation based on the weight fractions of the respective monomers and the Tg values (Kelvin; K) of their respective homopolymers is about -10 °C or below (typically, about -70 °C to -10 °C). When the low-temperature adhesive strength is more valued, it is more preferable to have a monomer composition that gives a Tg value of about -20 °C. or below (typically, about -70 °C to -20 °C). In order to improve the damping property, it is preferable to have a monomer composition that gives a Tg value of about -30 °C to -10 °C. The monomer composition (kinds and weight fractions of the monomers (m1, m2, other optional monomers)) can be adjusted so that the Tg value come to fall within the above range. The Tg values of various homopolymers can be found, for example, in "Handbook of Pressure Sensitive Adhesive Technology" by Nikkan Kogyo Shimbun Ltd., "Polymer Handbook" by Wiley-Interscience and the like. In this description, as the Tg values of the homopolymers formed of the monomers listed below, the following values are used, respectively:

| | |
|---|---|
| 2-ethyl hexyl acrylate (2EHA) | -70 °C |
| n-butyl acrylate (BA) | -54 °C |
| 2-vinyl-2-oxazoline (VOZO) | 108 °C |
| N-vinyl-2-pyrrolidone (NVP) | 54 °C. |
| diethyl acrylamide (DEAA) | 81 °C |
| 4-hydroxybutyl acrylate (4HBA) | -32 °C |

The PSA composition disclosed herein comprises at least a copolymerization product of the monomer mixture. The method to polymerize the monomer mixture is not especially limited and various conventional polymerization methods can be appropriately employed. For example, thermally-initiated polymerization methods (thermal polymerization such as solution polymerization, emulsion polymerization, bulk polymerization, etc.); photopolymerization carried out by irradiation of a light (UV ray or the like) in the presence of a photopolymerization initiator; radiation-induced polymerization carried out by inducing formation of a radical, a cation, an anion or the like by irradiation of a high energy ray such as radioactive ray (β ray, y ray, or the like) etc.; and so on can be accordingly employed.

The embodiment of polymerization is not especially limited and can be carried out by an appropriately selected conventional monomer supplying method, polymerization conditions (temperature, reaction time, pressure and the like), use of the other components (polymerization initiator, surfactant) other than the monomers. For example, as for the monomer supplying method, the monomer mixture can be supplied entirely at once (all-at-once supply), gradually dropwise (continuous supply), in portions at prescribed time intervals (portion-wise supply). A portion or the entirety of the monomer mixture can be supplied as a solution where it is dissolved in a solvent or as a dispersion in which it is emulsified with water.

For the initiator used to carry out the copolymerization reaction, in accordance with the polymerization method, one, two or more kinds selected from known or conventional polymerization initiators can be used. For thermal polymerization (solution polymerization, emulsion polymerization), can be used, for example, azo-based polymerization initiators, peroxide-based initiators, redox-based initiators as a combination of a peroxide and a reducing agent, substituted ethane-based initiators, etc. Thermal polymerization may be preferably carried out at a temperature of, for instance, about 20 to 100 °C (typically, 40 to 80 °C). For photopolymerization, various photopolymerization initiators can be used.

Examples of azo-based polymerization initiators include 2,2'-azobis-isobutylonitrile (AIBN), 2,2'-azobis(2- methylpropionamidine) disulfate, 2,2'-azobis(2-amidinopropane) dihydrochloride, 2,2'-azobis[2-(5-methyl-2-imidazoline-2-yl) propane] dihydrochloride, 2,2'-azobis(N,N'-dimethylene-isobutylamidine), 2,2'-azobis[N-(2-carboxyethyl)-2-methylpropionamidine] hydrate, 2,2'-azobis(4-methoxy-2,4-dimethylvaleronitrile), 2,2'-azobis(2,4-di methylvaleronitrile), 2,2'-azobis(2-methylbutylnitrile), 1,1'-azobis(cyclohexane-1-carbonitrile), 2,2'-azobis(2,4,4-trimethyl pentane), dimethyl-2,2'-azobis(2-methylpropionate) and the like.

Examples of peroxide-based initiators include persulfates such as potassium persulfate, ammonium persulfate and the like; benzoyl peroxide, t-butyl hydroperoxide, di-t-butyl peroxide, t-butyl peroxybenzoate, dicumyl peroxide, 1,1-bis(t-butylperoxy)-3,3,5-trimethyl cyclohexane, 1,1-bis(t-butylperoxy)cyclododecane, hydrogen peroxide and the like.

Examples of redox-based initiators include a combination of a peroxide and ascorbic acid (such as a combination of an aqueous hydrogen peroxide solution and ascorbic acid), a combination of a peroxide and an iron(II) salt (such as a combination of an aqueous hydrogen peroxide solution and an iron(II) salt), a combination of a persulfate and sodium hydrogen sulfite, and the like.

Examples of substituted ethane-based initiators include phenyl-substituted ethanes and the like.

Examples of photopolymerization initiators include ketal-based photopolymerization initiators, acetophenone-based photopolymerization initiators, benzoin ether-based photopolymerization initiators, acylphosphine oxide-based photopolymerization initiators, $\alpha$-ketol-based photopolymerization initiators, aromatic sulfonyl chloride-based photopolymerization initiators, optically active oxime-based photopolymerization initiators, benzoin-based photopolymerization initiators, benzil-based photopolymerization initiators, benzophenone-based photopolymerization initiators, thioxanthone-based photopolymerization initiators and the like.

Examples of ketal-based photopolymerization initiators include 2,2-dimethoxy-1,2-diphenylethane-1-on (e.g., trade name "IRGACURE 651" (a Chiba Japan K. K. product)) and the like.

Examples of acetophenone-based photopolymerization initiators include 1-hydroxycyclohexyl phenyl ketone (e.g., trade name "IRGACURE 184" (a Chiba Japan K. K. product)), 2,2-diethoxyacetophenone, 2,2-dimethoxy-2-phenylacetophenone, 4-phenoxy-dichloroacetophenone, 4-(t-butyl)dichloroacetophenone and the like.

Examples of benzoin ether-based photopolymerization initiators include benzoin methyl ether, benzoin ethyl ether, benzoin propyl ether, benzoin isopropyl ether, benzoin isobutyl ether and the like.

As the acylphosphine oxide-based photopolymerization initiator, for example, trade name "Lucirin TPO" (a BASF product) or the like can be used.

Examples of $\alpha$-ketol-based photopolymerization initiators include 2-methyl 2-hydroxy propiophenone, 1-[4-(2-hydroxyethyl)phenyl]-2-methylpropane-1-on and the like.

Examples of aromatic sulfonyl chloride-based photopolymerization initiators include 2-naphthalene sulfonyl chloride and the like.

Examples of optically active oxime-based photopolymerization initiators include 1-phenyl-1,1-propanedion-2-(o-exhoxycarbonyl)-oxime and the like.

Examples of benzoin-based photopolymerization initiators include benzoin.

Examples of benzil-based photopolymerization initiators include benzil.

Examples of benzophenone-based photopolymerization initiators include benzophenone, benzoylbenzoic acid, 3,3'-dimethyl-4-methoxybenzophenone, polyvinyl benzophenone, $\alpha$-hydroxycyclohexyl phenyl ketone and the like.

Examples of thioxanthone-based photopolymerization initiators include thioxanthone, 2-chlorothioxanthone, 2-methylthioxanthone, 2,4-dimethylthioxanthone, isopropylthioxanthone, 2,4-diisopropylthioxanthone, dodecylthioxanthone and the like.

The polymerization initiator can be used in a usual amount selected from a range of, for example, about 0.001 to 5 parts by weight (typically 0.01 to 2 parts by weight; for example, about 0.01 to 1 part by weight) relative to 100 parts by weight of all the monomer components. When the amount of polymerization initiator is too large or too small, it may be difficult to obtain desired adhesive properties.

As the emulsifier (surfactant) for emulsion polymerization, anion-based emulsifiers, nonion-based emulsifiers, etc., can be utilized. Examples of anion-based emulsifiers include sodium polyoxyethylene alkyl ether sulfate, ammonium polyoxyethylene alkyl phenylether sulfate, sodium polyoxyethylene alkyl phenylether sulfate, sodium lauryl sulfate, ammonium lauryl sulfate, sodium dodecylbenzenesulfonate, sodium polyoxyethylene alkylsulfosuccinate and the like. Examples of nonion-based emulsifiers include polyoxyethylene alkyl ether, polyoxyethylene alkyl phenyl ether, polyoxyethylene aliphatic acid ester, polyoxyethylene polyoxypropylene block polymer and the like. Also usable is a radically-polymerizable emulsifier (reactive emulsifier) having a structure containing a radically-polymerizable group (vinyl group, propenyl group, isopropenyl group, vinyl ether group (vinyloxy group), allyl ether group (allyloxy group) or the like) incorporated into an anion-based or a nonion-based emulsifier. Of these emulsifiers, one species can be used solely, or two or more species can be used together. The amount of emulsifier (based on solid content) can be about 0.2 to 10 parts by weight (preferably about 0.5 to 5 parts by weight) relative to 100 parts by weight of all the monomer components.

The copolymerization product contained in the PSA composition disclosed herein is a product obtained by copolymerizing the monomer mixture at least partially. It may be a partially polymerized product or a completely polymerized product. In other words, the conversion of the monomers (monomer conversion) in the copolymerization product is not particularly limited and the PSA composition may or may not essentially contain unreacted monomers. It may contain the other components (which may be a polymerization initiator, solvent, dispersion medium and so on) used in the copolymerization reaction. To the PSA composition, besides the copolymerization product, the other components such as a polymerization initiator, a solvent, a dispersion medium and so forth can be further added as needed.

The conversion in the copolymerization product can be determined by the following procedures:

[Measurement of Conversion]

Approximately 0.5 g of a sample (having a weight of $Wp_1$) is obtained from the copolymerization product and weighed out accurately. Unreacted monomers are allowed to vaporize by heating the sample at 130°C for 2 hours and the remaining sample (having a weight of $Wp_2$) is accurately weighed out after the heating. The conversion can be determined by substituting the respective values into the following equation:

$$\mathrm{Conversion} = (Wp_2/Wp_1) \times 100\ \%$$

In one embodiment, the copolymerization product may be a partially polymerized product having a conversion of, for instance, about 2 to 40 % by weight (preferably about 5 to 20 % by weight). The partially polymerized product may form a syrup in which a copolymer formed of a portion of the monomers and unreacted monomers are both present. Hereinafter, a partially polymerized product in such a state may be referred to as a "monomer syrup". The polymerization method to carry out the partial polymerization of the monomer mixture is not particularly limited and various polymerization methods as described above can be employed. The PSA composition in such an embodiment is prepared so that it can form a PSA by further curing (polymerization) (typically by subjecting it to further copolymerization reaction thereby increasing the conversion to an extent nearly equivalent to that of the completely polymerized product). The polymerization method for curing the composition is not particularly limited and it may be the same with or different from the polymerization method employed for the partial polymerization of the monomer mixture (polymerization method used to prepare the aforementioned composition). The PSA composition in such an embodiment contains unreacted monomers with a small conversion; and therefore, without dilution with a solvent or a dispersion medium, it may be of a spreadable viscosity. Thus, such an embodiment can be preferably applied, for example, to a PSA composition essentially free of solvents (solvent free). Prepared to be curable by a polymerization method requiring no solvent or dispersion medium (photopolymerization, radiation-induced polymerization or the like), a solvent free PSA composition can form a PSA layer upon a simple curing treatment such as irradiation of a light, a radioactive ray or the like after coated on a suitable substrate (which may be a release liner). At this time, a suitable crosslinking treatment can be carried out as needed.

When the conversion of the partially polymerized product is too large, depending on the form of the PSA composition, the handling of the composition may be compromised. For instance, in the case of a solvent free PSA composition, it may result in a excessively high viscosity thereby making the coating process difficult at room temperature. On the other hand, when the conversion is too small, the physical properties of the PSA obtained by curing the composition is likely to be inconsistent or the viscosity of the composition may become too low for a coating process.

A solvent free PSA composition can be readily prepared by partial copolymerization of the monomer mixture utilizing photopolymerization. A product equivalent to the partially polymerized product obtained by photopolymerizatioon may be prepared by partial polymerization using a method other than photopolymerization or by mixing unreacted monomers with a copolymer having a relatively low molecular weight which had been obtained by various polymerization methods. From standpoint of efficiency and simplicity, the partial polymerization of the monomer mixture is carried out preferably by photopolymerization. In photopolymerization, by changing the light irradiance, the conversion (monomer conversion) in the partially polymerized product can be readily adjusted to control the viscosity. Since the resulting partially polymerized product contains a photopolymerization initiator already, when further curing the composition to form a PSA, it is already composed to be photo-curable as is. At this time, an additional photopolymerization initiator can be supplied as needed. The additional photopolymerization initiator may be the same with or different from the photopolymerization initiator used for the partial polymerization. A solvent free PSA composition prepared by a method other than photopolymerization can be made photo-curable by addition of a photopolymerization initiator. A photo-curable solvent free PSA composition has an advantage that it can readily form a thick PSA layer. In addition, since it does not use organic solvents, it is also preferable in terms of environment health.

The amount of the photopolymerization initiator is not particularly limited. For example, a generally-used amount of polymerization initiator as described above can be suitably employed. Note that the amount of the photopolymerization initiator herein refers to the total amount of the photopolymerization initiator used in the production process of the PSA composition. Therefore, with respect to a PSA composition prepared by supplying (post-initial addition of) an additional photopolymerization initiator to the partially polymerized product obtained by photopolymerization, it refers to the combined amount of the fraction used in the partial polymerization and the additional fraction.

In an embodiment, the copolymerization product is a completely polymerized product having a conversion of about 95 % by weight or greater (preferably about 99 % by weight or greater), which is measured by the procedures described above. Such an embodiment can be preferably applied to a PSA composition in a form (in a solvent-based form (organic solvent solution), in an aqueous solution, in an emulsion and so forth) where the PSA components are diluted with (dissolved or dispersed in) a solvent (an organic solvent, water or a mixture of these) to a suitable viscosity. Prepared to contain a completely polymerized product, a PSA composition in such an embodiment can form a PSA layer by a simple curing procedure such as drying, etc., after coated on a suitable substrate (which may be a release liner). At this time, an appropriate crosslinking treatment can be carried out as needed.

A solvent-based PSA composition can be readily prepared by, for example, solution polymerization of the monomer mixture. Solution polymerization efficiently produces a completely polymerized product. It can also be prepared by dissolving in a suitable organic solvent, a copolymerization product obtained by a polymerization method other than solution polymerization (typically a product equivalent to a completely polymerized product obtained by solution polymerization). From standpoint of efficiency, preparation by solution polymerization is preferable. A solvent-based PSA composition has an advantage that it requires a relatively short time for adjustment and post-coating curing procedures.

A PSA emulsion composition can be readily prepared by, for example, subjecting the monomer mixture to emulsion polymerization. Emulsion polymerization can efficiently produce a completely polymerized product. It can also be prepared by emulsifying in an aqueous solvent (typically water) in the presence of a suitable emulsifier, a copolymerization product obtained by a polymerization method other than emulsion polymerization (typically a product equivalent to the completely polymerized product obtained by the emulsion polymerization). From standpoint of efficiency, preparation by emulsion polymerization is preferable.

In a preferred embodiment, the PSA composition disclosed herein comprises a crosslinking agent. Use of a crosslinking agent can provide a suitable cohesive strength and adhesive strength to the PSA layer formed from the composition. As the crosslinking agent, a conventional one in the PSA field can be selected accordingly. For instance, polyfunctional (meth)acrylates, isocyanate-based crosslinking agents, epoxy-based crosslinking agents, aziridine-based crosslinking agents, melamine-based crosslinking agents, metal chelate-based crosslinking agents, metal salt-based crosslinking agents, peroxide-based crosslinking agents, oxazoline-based crosslinking agents, urea-based crosslinking agents, amino-based crosslinking agents, carbodiimide-based crosslinking agents, coupling agent-based crosslinking agents (e.g., silane coupling agent) and the like can be used. Of these, one kind can be used solely, or two or more kinds can be used together. The crosslinking agent is preferably added after the copolymerization reaction (complete or partial polymerization) (i.e., post-initial addition).

In the embodiment where the copolymerization product is a partially polymerized product, as the crosslinking agent, a polyfunctional (meth)acrylate (i.e., a monomer having two or more (meth)acryloyl groups per molecule) can be preferably used. Examples include 1,6-hexanediol di(meth)acrylate, trimethylolpropane tri(meth)acrylate, pentaerythritol tetra(meth)acrylate, 1,2-ethyleneglycol di(meth)acrylate, dipentaerythritol hexaacrylate and so on. From viewpoint of polymerization reactivity (crosslinking reactivity), etc., use of a polyfunctional acrylate is preferable. In a preferred embodiment, as the crosslinking agent, one, two or more kinds (typically one kind) of the polyfunctional (meth)acrylate are used solely. Alternatively, to an extent where the effects of the present invention are not significantly degraded, such a polyfunctional (meth)acrylate can be used together with the other crosslinking agents (e.g., an isocyanate-based crosslinking agent).

The amount of the polyfunctional (meth)acrylate used as the crosslinking agent can be, for example, about 0.001 to 5 parts by weight relative to 100 parts by weight of monomer components. Preferably, it is suitable to be about 0.01 to 3 parts by weight (e.g., about 0.05 to 0.5 parts by weight). Too small an amount of the polyfunctional (meth) acrylate may not produce a sufficient crosslinking effect, resulting in a tendency of a decrease in the cohesive strength or the repulsion resistance. On the other hand, too large an amount of the polyfunctional (meth)acrylate may result in an excessive increase in the elastic modulus of the post-curing PSA with a tendency of a decrease in the adhesive strength or the tackiness.

In the embodiment where the copolymerization product is a completely polymerized product, an isocyanate-based crosslinking agent can be used preferably. In a preferred embodiment, as the crosslinking agent, one, two or more kinds (typically one kind) of the isocyanate-based crosslinking agent are used. Alternatively, to an extent where the effects of the present invention are not significantly degraded, an isocyanate-based crosslinking agent can be used together with the other crosslinking agents.

Examples of isocyanates include aliphatic polyisocyanates such as 1,6-hexamethylene diisocyanate, 1,4-tetramethylene diisocyanate, 2- methyl-1,5-pentane diisocyanate, 3- methyl-1,5-pentane diisocyanate, lysine diisocyanate and the like; aliphatic polyisocyanates such as isophorone diisocyanate, cyclohexyl diisocyanate, hydrogenated tolylene diisocyanate, hydrogenated xylene diisocyanate, hydrogenated diphenylmethane diisocyanate, hydrogenated tetramethylxylene diisocyanate and the like; aromatic polyisocyanates such as 2,4-tolylene diisocyanate, 2,6-tolylene diisocyanate, 4,4'-diphenylmethane diisocyanate, 2,4'-diphenylmethane diisocyanate, 4,4'-diphenylether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate and the like; araliphatic polyisocyanates such as xylylene-1,4-diisocyanate, xylylene-1,3-diisocyanate and the like; etc.

Note that as the isocyanate-based crosslinking agent, also usable are a dimer, a trimer, a reaction product, and a polymerized product of an isocyanate listed as an example above (e.g., a dimer or trimer of diphenylmethane diisocyanate, a reaction product of trimethylolpropane and tolylene diisocyanate, a reaction product of trimethylolpropane and hexamethylene diisocyanate, polymethylene polyphenyl isocyanate, polyether polyisocyanate, polyester polyisocyanate) and the like. For example, a reaction product of trimethylolpropane and tolylene diisocyanate can be preferably used.

The amount of the isocyanate-based crosslinking agent can be, for example, about 0.001 to 10 parts by weight (e.g., about 0.001 to 5 parts by weight) relative to 100 parts by weight of monomer components (which correspond approximately to 100 parts by weight of the resulting copolymer when the conversion of the monomer components in the PSA composition is nearly 100 %) and is preferably about 0.01 to 5 parts by weight (e.g., 0.01 to 3 parts by weight). With too small an amount of the crosslinking agent, a sufficient effect (an effect of improving the adhesive characteristics) is unlikely to be produced while with too large an amount, the balance of the adhesive properties is likely to be disturbed as well.

With respect to the PSA layer included in the PSA sheet disclosed herein, the PSA preferably has a gel fraction of, for instance, about 20 to 80 %. The conditions such as the monomer composition, conversion of the monomer components in the PSA composition, molecular weight of the produced copolymer, conditions (drying condition, light irradiation condition and so on) of the PSA layer preparation, kind of the crosslinking agent and the amount thereof and so on can be suitably selected so that the resulting PSA (when a crosslinking agent is contained in the composition, the post-crosslinking PSA) will have such a gel fraction. When the gel fraction of PSA is too low, the cohesive strength tends to be insufficient. On the other hand, when the gel fraction is too high, the adhesive strength or the tackiness may tend to be weaker. A PSA with a gel fraction in a range of about 25 to 80 % (e.g., about 55 to 75 %) may produce better adhesive characteristics.

"Gel fraction of PSA" herein refers to a value measured by the procedures blow. The gel fraction can be considered as a weight fraction of the ethyl acetate-insoluble portion in the PSA.

[Measurement of Gel Fraction]

A PSA sample (weight: $Wg_1$) is wrapped into a pouch with a porous polytetrafluoroethylene membrane (weight: $Wg_2$) having an average pore diameter of 0.2 $\mu$m, and the opening is tied with twine (weight: $Wg_3$). This package is immersed in 50 mL of ethyl acetate and stored at room temperature (typically 23 °C) for 7 days to extract only the sol components of the PSA layer out of the membrane. After this, the package is taken out and from the outer surface thereof, any residual ethyl acetate is wiped off. The package is then dried at 130 °C for 2 hours and the package weight ($Wg_4$) is measured. The gel fraction of the PSA is determined by substituting the respective values into the following equation:

$$\text{Gel Fraction} = [(Wg_4 - Wg_2 - Wg_3)/Wg_1] \times 100\,\%$$

As the porous polytetrafluoroethylene (PTFE) membrane, trade name "NITOFURON (registered trade mark) NTF1122" (0.2 $\mu$m average pore diameter, 75 % porosity, 85 $\mu$m thickness) available from Nitto Denko Corporation or a similar product is desirably used.

When copolymerization of the monomer mixture is carried out, a transfer agent (which can be considered as a molecular weight adjusting agent or a polymerization degree adjusting agent) can be used as needed. As the transfer agent, one, two or more kinds of known or conventional transfer agents can be used. The transfer agent can be used in a usual amount. For example, the amount can be selected from a range of about 0.001 to 0.5 part by weight relative to 100 parts by weight of the starting monomers.

The PSA composition disclosed herein may comprise, as optional components, various additives generally used in the field of PSA compositions. Examples of such optional components include tackifiers (rosin resin, petroleum resin, terpene resin, phenol resin, ketone resin and the like), plasticizers, softeners, fillers, colorants (pigments, dyes and the like), antioxidants, leveling agents, stabilizing agents, preservatives and so on. As these additives, conventional ones can be used by usual methods and they do not particularly characterize the present invention; and therefore detailed descriptions are omitted.

The PSA composition disclosed herein is preferably prepared so that the final copolymerization product (corresponding to the acrylic polymer contained in the completely polymerized product) formed upon a curing process (drying, crosslinking, polymerization, etc.) as needed will come to account for about 50 % by weight or greater (more preferably about 70 % by weight or greater; for instance, 90 % by weight or greater). Such an PSA composition may be capable of forming a PSA layer with better adhesive characteristics.

The PSA sheet according to the present invention comprises a PSA layer formed from a PSA composition disclosed herein. It can be a PSA sheet having such a PSA layer affixed on one or each side of a substrate (support) sheet (with no intention of removing the PSA layer from the substrate) (a PSA sheet with a substrate) or a PSA sheet having such a PSA layer on a releasable support such as release liner (release paper, resin sheet with release treatment on the surface or the like) (in the form where the substrate supporting the PSA layer is to be removed as release liner when adhered) (a so-called substrate-free PSA sheet). The PSA sheet herein may encompass those referred to as PSA tapes, PSA labels, PSA films and the like. The PSA layer is not limited to be in a continuous form and it can be formed in a regular or random pattern of dots, stripes and the like.

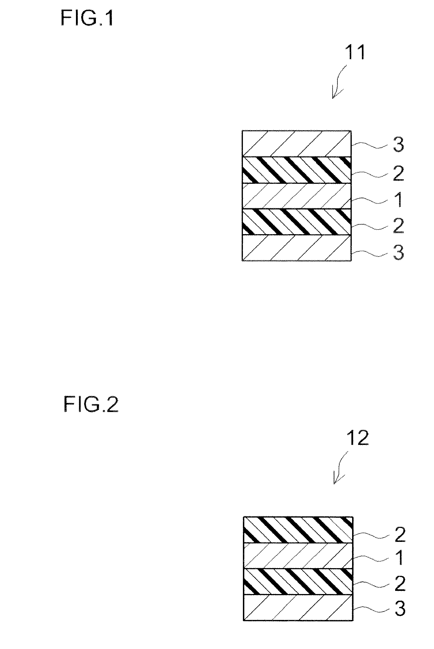

The PSA sheet disclosed herein may have, for example, cross sections schematically shown in Figure 1 to Figure 6. Of these, Figure 1 and Figure 2 show examples of configurations of the PSA sheet with a substrate that is adhesive on both sides (a double-coated PSA sheet with a substrate). PSA sheet 11 shown in Figure 1 has a configuration in which PSA layer 2 is provided on each side of substrate 1 and these PSA layers 2 are protected, respectively, by release liners 3 in which at least the side on the PSA layer has a releasable surface. PSA sheet 12 shown in Figure 2 has a configuration in which PSA layer 2 is provided on each side of substrate 1 and one of these PSA layers is protected by release liner 3 having a releasable surface on each side. PSA sheet 12 of this kind will have a configuration in which the other PSA layer is also protected by release liner 3 when PSA sheet 12 is rolled up to allow the other PSA layer to contact the back side of release liner 3.

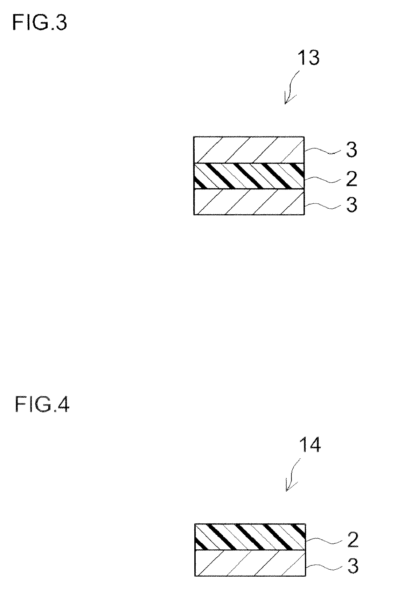

Figure 3 and Figure 4 show examples of configurations of the substrate-free PSA sheet. PSA sheet 13 shown in Figure 3 has a configuration in which each surface of substrate-free PSA layer 2 is protected by release liner 3 in which at least the side on the PSA layer has a releasable surface. PSA sheet 14 shown in Figure 4 has a configuration in which one surface of substrate-free PSA layer 2 is protected by release liner 3 having a releasable surface on each side so that winding this will allow the other surface of PSA layer 2 to come in contact with release liner 3 and this other surface is also protected by release liner 3.

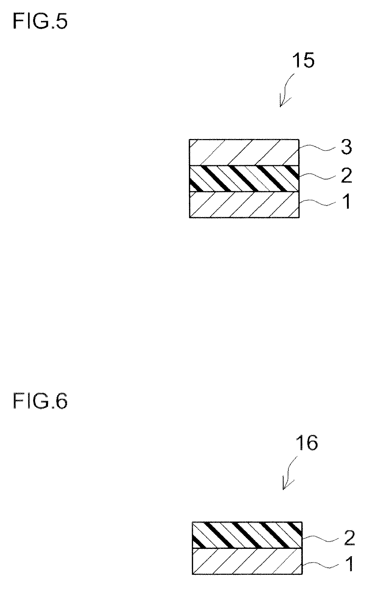

Figure 5 and Figure 6 show examples of configurations of the PSA sheet with a substrate that is adhesive on one side. PSA sheet 15 shown in Figure 5 has a configuration in which PSA layer 2 is provided on one side of substrate 1 and the surface (the surface to be adhered) of PSA layer 2 is protected by release liner 3 in which at least the side on the PSA layer has a releasable surface. PSA sheet 16 shown in Figure 6 has a configuration in which PSA layer 2 is provided on a first surface of substrate 1. The second surface of substrate 1 is releasable so that by winding PSA sheet 16, this second surface comes in contact with PSA layer 2 whereby the surface (surface to be adhered) of the PSA layer is protected with the second surface of substrate 1.

As the substrate, for example, in accordance with the purpose of the PSA sheet, a suitable one can be selected for use from plastic films such as polypropylene film, ethylene-propylene copolymer film, polyester film, polyvinyl chloride film and the like; foam substrates such as polyurethane foam, polyethylene foam and the like; paper such as kraft paper, crepe paper, Washi paper and the like; fabrics such as cotton fabric, staple cloth fabric and the like; non-woven fabrics such as polyester non-woven fabric, vinylon non-woven fabric; metal foils such as aluminum foil, copper foil and the like; and so on. As the plastic film, either of a non-stretched film and a(n) (uni-axially or bi-axially) stretched film can be used. A surface treatment such as primer coating, corona discharge treatment, etc., can be given to the surface of the substrate to be provided with a PSA layer. The thickness of the substrate can be suitably selected in accordance with the purpose, but in general it is approximately 10 $\mu$m to 500 $\mu$m (typically 10 $\mu$m to 200 $\mu$m).

The PSA layer may be of a cured PSA composition disclosed herein. In particular, it can be preferably formed by suitably carrying out a curing process after applying (typically coating) the PSA composition onto an appropriate substrate (which may be a release liner). When two or more kinds of curing processes (drying, crosslinking, polymerization, etc.) are performed, these can be carried out simultaneously or in multiple steps.

With a PSA composition using a partially polymerized product, in typical, as the curing process, final copolymerization reaction is carried out (the partially polymerized product is subjected to an additional copolymerization reaction to form a completely polymerized product). For example, with a photo-curable PSA composition, light irradiation is carried out. When needed, curing processes such as crosslinking, drying, etc., can be performed. For instance, in case with a photo-curable PSA composition that requires drying, the photo-curing can be performed after the drying.

With a PSA composition using a completely polymerized product, in typical, as the curing process, procedures such as drying (heat-drying), crosslinking and so on can be carried out as needed.

Coating of the PSA composition can be accomplished using a conventional coater such as gravure roll coater, reverse roll coater, kiss-roll coater, dip roll coater, bar coater, knife coater, spray coater and so on. From standpoint of facilitating the crosslinking reaction and increasing the production efficiency, the drying of the PSA composition is preferably carried out with added heat. Though it may depend on the type of the support to be coated with the composition, a drying temperature of about 40 to 150 °C can be employed.
For a PSA sheet with a substrate, a PSA layer can be formed by directly applying a PSA composition onto the substrate, or a PSA layer formed on a release liner can be transferred to the substrate.

The thickness of the PSA layer is not particularly limited. For example, usually by making it to be 10 μm or greater (preferably about 20 μm or greater, more preferably about 30 μm or greater), good adhesive characteristics (e.g., adhesive strength) can be achieved. By forming a thicker PSA layer, the damping property can be improved. For instance, the PSA layer can have a thickness up to about 2000 μm.

In a preferred embodiment, the PSA sheet disclosed herein may produce effective damping as indicated by a loss factor of at least 0.1 when measured at 20 °C over 400 Hz to 600 Hz by the method described below in accordance with JIS K 7391, "test methods for vibration-damping property in damped composite beam of unconstrained type". Such a PSA sheet may be preferably used when a damping material (a material to absorb vibrations) is affixed on a structure or an equipment that can be a vibration source. A material obtained by curing of the PSA composition disclosed herein can be used as a damping material without serving a bonding purpose.

[Damping Property]

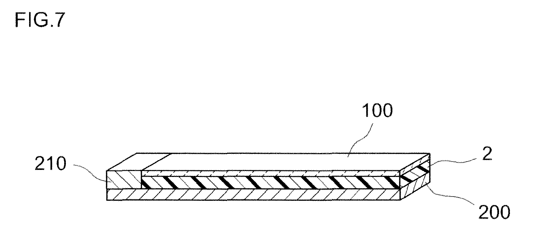

As shown in Figure 7, to prepare a test piece, PSA layer 2 (10 mm by 220 mm, 0.8 mm thick) backed with glass cloth 100 (10 mm by 220 mm, 0.2 mm thick) is adhered on SPCC steel plate 200 (steel plate cold commercial (commercial cold rolled steel plate); 10 mm by 250 mm (including 30 mm of a root portion), 0.8 mm thick), which has, on one end, a root portion to be clamped. The test piece is clamped at the root portion to a measuring device for cantilever beam test, and the loss factor is measured at 20 °C over a frequency range of 400 Hz to 600 Hz by half-power bandwidth method. As the glass cloth, a product in compliance with the IPC 7628 standard can be used. For example, usable is a woven fabric manufactured by weaving a bundle of glass fibers of 9 μm filament diameter, 400 filament count and 67.5 tex into a plain-weave fabric having a warp density of 44 threads/25mm and a weft density of 32 threads/25mm, and further treating the resulting fabric with thermal de-oiling and sizing agent removing processes; or a product equivalent thereto. A glass cloth manufactured in such a way may have approximately a weight of 210 g/m$^2$, a thickness of 200 μm and an air permeability of 3 cm$^3$/cm$^2$/sec. The root portion of the SPCC steel plate can be constructed by, for example, bonding SPCC steel piece 210 (10 mm by 30 mm, 1 mm thick) to SPCC steel plate 200 using an epoxy resin adhesive heat-resistant up to 300 °C. As the cantilever beam test device, for instance, magnetic transducer model number "MM-0002" available from Bruel & Kjaer or an equivalent apparatus can be used.

Hereafter, some examples according to the present invention are described with no intention of limiting the present invention to those indicated in the examples. In the description below, "part(s)" and "%" are based on the weight unless otherwise specified.

[Fabrication of PSA sheets]

As described below, PSA sheets of Examples 1 to 13 were fabricated. Table 1 shows the respective monomer compositions, the Tg values calculated from their monomer compositions using the Fox equation and the polymerization methods employed.

<Example 1>

Relative to 100 parts of a monomer mixture composed of 95 parts of 2EHA and 5 parts of VOZO, were added, as the photopolymerization initiator, 0.05 part of 2,2-dimethoxy-1,2-diphenylethane-1-on (a Chiba Japan K. K. product, trade name "IRGACURE 651 ") and 0.05 part of 1-hydroxycyclohexylphenylketone (a Chiba Japan K. K. product, trade name "IRGACURE 184"). This mixture was stirred in an atmosphere of nitrogen gas to sufficiently remove dissolved oxygen and was irradiated with ultraviolet (UV) light to obtain a partially polymerized product (monomer syrup) having a conversion of 10.5 %.
To the partially polymerized product, was added, as the crosslinking agent, 0.05 part of 1,6-hexanediol diacrylate (HDDA) relative to 100 parts of the starting monomers and the resulting mixture was mixed to a homogeneous state with stirring. The resultant was coated onto a first release liner and on top of this coating layer, a second release liner was laminated. This was irradiated with UV light having an intensity of about 5 mW/cm$^2$ at a dose of about 36000 mJ/cm$^2$ to form a PSA layer having a post-curing thickness of 50 μm and a double-coated PSA sheet was thus obtained. As for each of the release liners, was used a polyethylene terephthalate (PET) film of 38 μm thickness wherein the surface in contact with the PSA layer had been treated with a silicone-based release agent.

<Example 2>

Using a monomer mixture composed of 90 parts of 2EHA and 10 parts of VOZO, a partially polymerized product having a conversion of 11.0 % was obtained similarly to Example 1. In the same manner as Example 1 for the rest, a double-coated PSA sheet was obtained.

<Example 3>

Except that a monomer mixture composed of 80 parts of 2EHA and 20 parts of VOZO was used, a partially polymerized product having a conversion of about 20 % was obtained in the same manner as Example 1. Except that the added amount of HDDA was 0.15 part relative to 100 parts of the monomers, a double-coated PSA sheet was obtained in the same manner as Example 1.

<Example 4>

Except that a monomer mixture composed of 70 parts of BA and 30 parts of VOZO was used, a partially polymerized product having a conversion of 15.9 % was obtained in the same manner as Example 1. Except that the added amount of HDDA was 0.18 part relative to 100 parts of the monomers, a double-coated PSA sheet was obtained in the same manner as Example 1.

<Example 5>

Except that a monomer mixture composed of 60 parts of 2EHA and 40 parts of VOZO was used, a partially polymerized product having a conversion of 18.1 % was obtained in the same manner as Example 1. Except that the added amount of HDDA was 0.12 part relative to 100 parts of the monomers, a double-coated PSA sheet was obtained in the same manner as Example 1.

<Example 6>

To a reaction vessel equipped with a condenser, a nitrogen inlet, a thermometer, an addition funnel and a stirrer, were placed 70 parts of 2EHA, 30 parts of VOZO, 1 part of 4HBA and 48.5 parts of ethyl acetate. The reaction vessel was purged with nitrogen gas by introducing nitrogen gas with gentle stirring. The reaction mixture was heated to 60 °C and following an addition of 0.2 part of AIBN (polymerization initiator), polymerization reaction was carried out at 60 °C for 5 hours. It was then heated to 70 °C and following an addition of 0.2 part of AIBN, further polymerization reaction was carried out at 70 °C for 3.5 hours. To the resulting acrylic polymer solution, for 100 parts of the acrylic polymer contained therein, was added 3 parts of an isocyanate-based crosslinking agent (available from Nippon Polyurethane Kogyo Co., Ltd., trade name "COLONATE HL") (C/HL) and the resulting mixture was mixed to a homogeneous state with stirring.
The resultant was coated onto a first release liner and dried (cured) at 100 °C for 3 minutes to form a PSA layer having a thickness of 50 μm. On top of this PSA layer, a second release liner was laminated to obtain a double-coated PSA sheet. As for each of the release liners, was used a PET film of 30 μm thickness wherein the surface in contact with the PSA layer had been treated with a silicone-based release agent.

<Example 7>

Except that a monomer mixture composed of 60 parts of 2EHA, 40 parts of VOZO and 1 part of 4HBA was used and the amount of C/HL added to the resulting acrylic polymer solution was 1 part, a double-coated PSA sheet was obtained in the same manner as Example 6.

<Example 8>

Except that a monomer mixture composed of 40 parts of 2EHA, 60 parts of VOZO and 1 part of 4HBA was used and the amount of C/HL added to the resulting acrylic polymer solution was 1 part, a double-coated PSA sheet was obtained in the same manner as Example 6.

<Example 9>

Using a monomer mixture composed of 80 parts of 2EHA and 20 parts of NVP, a partially polymerized product having a conversion of 13.5 % was obtained similarly to Example 1. To this, was added, as the crosslinking agent, 0.02 part of HDDA relative to 100 parts of the monomers used and the resulting mixture was mixed to a homogeneous state with stirring. This was coated onto a first release liner and on top of the coating layer, a second release liner was laminated. This was irradiated with UV light having an intensity of about 5 mW/cm$^2$ at a dose of about 720 mJ/cm$^2$ to form a PSA layer having a post-curing thickness of 50 $\mu$m and a double-coated PSA sheet was thus obtained. As for the respective release liners, the same ones as Example 1 were used.

<Examples 10>

Using a monomer mixture composed of 60 parts of 2EHA and 40 parts of NVP, a partially polymerized product having a conversion of 9.3 % was obtained similarly to Example 1. Except that the amount of HDDA added thereto was 0.02 part relative to 100 parts of the monomers, a double-coated PSA sheet was obtained in the same manner as Example 1.

<Example 11>

Using a monomer mixture composed of 70 parts of 2EHA and 30 parts of DEAA, a partially polymerized product having a conversion of 11.1 % was obtained similarly to Example 1. To this, for 100 parts of the monomers used, were added, as the crosslinking agent, 0.08 part of HDDA and as an additional portion of the polymerization initiator, 0.01 part each of trade names "IRGACURE 184" and "IRGACURE 651" and the resulting mixture was mixed to a homogeneous state with stirring. Except that this was coated onto the release liner, a double-coated PSA sheet was obtained in the same manner as Example 9.

<Example 12>

Using a monomer mixture composed of 90 parts of 2EHA and 10 parts of acrylic acid (AA; homopolymer Tg of 106 °C), a partially polymerized product having a conversion of 10 % was obtained similarly to Example 1. Except that the amount of HDDA added thereto was 0.04 part relative to 100 parts of the monomers, a double-coated PSA sheet was obtained in the same manner as Example 1.

<Example 13>

Using a monomer mixture composed of 75 parts of 2EHA and 25 parts of AA, a partially polymerized product having a conversion of 7.4 % was obtained similarly to Example 1. Except that the amount of HDDA added thereto was 0.04 part relative to 100 parts of the monomers, a double-coated PSA sheet was obtained in the same manner as Example 1.

The following evaluations were conducted on the respective PSA sheets. The results are shown in Table 2.

[Gel Fraction of PSA]

With each PSA sheet, the gel fraction of the PSA was measured by the method described above. As the porous PTFE membrane (weight $W_2$), trade name "NITOFURON (registered trade mark) NTF1122" (a Nitto Denko Corporation product) of 100 mm by 100 mm was used. As the twine (weight $W_3$), one of 1.5 mm thickness and approximately 100 mm length was used. For the PSA sample (weight $W_1$), a 20 cm$^2$ piece cut out of each PSA sheet was used after both of the release liners were removed.

[Corrosiveness to Metal]

From each PSA sheet (30 mm by 30 mm), the first release liner was removed and to the exposed first PSA surface, was adhered a transparent PET film having a thickness of 25 $\mu$m (with no prior release treatment). Then, the second release liner was removed and to the exposed second PSA surface, a copper film having a thickness of 80 $\mu$m was adhered to prepare a test piece. After this was stored under an atmosphere at 60 °C and of 95% RH for 170 hours, the copper film was visually examined, from the PET film side, over the surface bearing the adhered PSA sheet in order to observe if the color of the copper film surface had been changed and the metal corrosiveness of each PSA sheet was evaluated into two levels. When no significant discolorations were observed on the copper film surface, the corrosiveness to metal was rated as "low" while when a significant discoloration was found, the corrosiveness to metal was rated as "high".

[Damping Property]

With respect to each PSA sheet of Examples 4, 5 and 10, the loss factor at 20 °C over 400 to 600 Hz was measured by the method described above. As the test device, a magnetic transducer (model number "MM-0002") available from Bruel and Kjaer was used.

[High-temperature cohesive strength]

[80 °C]

The cohesive strength at 80 °C was measured for each PSA sheet using a creep test apparatus. In particular, the first release liner of each PSA sheet was removed and onto the exposed first PSA surface, a PET film having a thickness of 25 μm was adhered. By cutting this to have a width of 10 mm, a test piece was obtained. From this test piece, the second release liner was removed and the exposed second PSA surface was adhered to a bakelite plate over an adhering area of 10 mm width by 20 mm length. After this was stored at 80 °C for 30 minutes, the bakelite plate was vertically suspended and a 500-g load was applied to the free end of the test piece. In accordance with JIS Z 0237, under the conditions of loading, it was left in an environment at 80 °C for 2 hours and when the 2 hours had elapsed, the displacement (mm) of the test piece from the initial adhered position was measured.

[100 °C]

The 100 °C cohesive strength was measured for each PSA sheet in the same manner as that for the 80 °C cohesive strength.

[Low-temperature adhesive strength]

[to acrylic plate]

To the first PSA surface exposed by removing the first release liner from each PSA sheet, was adhered a PET film having a thickness of 50 μm (with no prior release treatment). This was cut to have a width of 25 mm to obtain a test piece. The test piece was stored in an environment at 5 °C and of 50 % RH for 30 minutes. The second release liner was removed from the test piece and the test piece was pressed to adhere to an adherend by rolling over with a 5-kg roller by one rotation. As the adherend, a clean acrylic plate that had been cleansed by 10 rounds of reciprocal rubbing with a clean wipe wet with isopropyl alcohol. After the resultant was stored in an environment at 5 °C for 30 minutes, the adhesive strength (N/25mm) to an acrylic plate was measured using a tensile testing machine at a pull speed of 300 mm/min and a peel angle of 180°.

[to ABS plate]

Using a ABS plate cleansed as described above in place of the acrylic plate, the adhesive strength (N/25mm) to a ABS plate was measured.

[Table 1]

| Example | ml | N-containing monomer | | | 4HBA | AA | Tg (°C) | Polymerization method |
|---|---|---|---|---|---|---|---|---|
| | | VOZO | NVP | DEAA | | | | |
| 1 | 95 | 5 | — | — | — | — | -65 | UV |
| 2 | 90 | 10 | — | — | — | — | -60 | UV |
| 3 | 80 | 20 | — | — | — | — | -49 | UV |
| 4 | 70 | 30 | — | — | — | — | -22 | UV |
| 5 | 60 | 40 | — | — | — | — | -23 | UV |

(continued)

| Example | ml | N-containing monomer | | | 4HBA | AA | Tg (°C) | Polymerization method |
|---|---|---|---|---|---|---|---|---|
| | | VOZO | NVP | DEAA | | | | |
| 6 | 70 | 30 | — | — | 1 | — | -37 | Solution |
| 7 | 60 | 40 | — | — | 1 | — | -23 | Solution |
| 8 | 40 | 60 | — | — | 1 | — | 9 | Solution |
| 9 | 80 | — | 20 | — | — | — | -53 | UV |
| 10 | 60 | — | 40 | — | — | — | -34 | UV |
| 11 | 70 | — | — | 30 | — | — | -40 | UV |
| 12 | 90 | — | — | — | — | 10 | -60 | UV |
| 13 | 75 | — | — | — | — | 25 | -43 | UV |

[Table 2]

| Example | Gel Fraction | Corrosiveness to metal | High-temperature cohesive strength (mm) | | Low-temperature adhesive strength (N/25mm) | | Damping effect |
|---|---|---|---|---|---|---|---|
| | | | 80 °C | 100 °C | Acrylate | ABS | |
| 1 | 72.9 | Low | 0.2 | 0.1 | 15.8 | 17.9 | — |
| 2 | 83.4 | Low | 0.15 | 0.1 | 19.2 | 17.7 | — |
| 3 | 26.7 | Low | 0.1 | 0.1 | 13.3 | 13.6 | — |
| 4 | 75.6 | Low | 0.1 | 0.18 | 20 | 21.4 | High |
| 5 | 65.0 | Low | 0.2 | 0.18 | 22 | 24.8 | High |
| 6 | 72.0 | Low | 0.1 | 0.1 | 17.8 | 18.3 | — |
| 7 | 55.4 | Low | 0.35 | 0.25 | 20.8 | 21.2 | — |
| 8 | 57.6 | Low | 0.25 | 0.3 | 7 | 6.4 | — |
| 9 | 57.7 | Low | 0.2 | Fallen | 23.3 | 21.6 | — |
| 10 | 81.4 | Low | 9 | Fallen | 1.3 | 1.6 | Low |
| 11 | 49.0 | Low | Fallen | Fallen | 24 | 26.3 | — |
| 12 | 69.7 | High | 0.72 | Fallen | 7.2 | 7.6 | — |
| 13 | 85.1 | High | 0.1 | 0.1 | 0.1 | 0.1 | — |

As shown in Tables 1 and 2, regarding the PSA sheets of Examples 1 to 11 in which no carboxyl-group-containing monomers had been used, all showed low corrosiveness to metal. On the other hand, with the PSA sheets of Examples 12 and 13 in which a carboxyl-group-containing monomer had been used, both exhibited high corrosiveness to metal. Of these low metal-corrosive PSA sheets of Examples 1 to 11, each PSA sheet of Examples 1 to 8 in which VOZO had been used in addition to monomer m1 simultaneously achieved various characteristics such as low corrosiveness to metal, an excellent cohesive strength at an elevated temperature, and a good adhesive strength to a resin such ABS or acrylate even at a low temperature. The PSA sheets of Examples 4 and 5 exhibited excellent damping in addition to those characteristics. On the other hand, the PSA sheets of Examples 9 to 11 in which a N-containing monomer other than VOZO had been used in addition to monomer m1, they all had fallen off in the cohesive strength test at 100 °C whereby they showed that their cohesive strength was insufficient at an elevated temperature. The PSA sheet of Example 10 showed poor damping as well.

Although specific examples of the present invention have been described in detail above, these are solely for exemplification with no intention of limiting the scope of the claims. The art described in the claims encompasses various modifications and changes made to the specific examples described above.

**Claims**

1. An acrylic pressure-sensitive adhesive composition, comprising a copolymerization product of a monomer mixture, with the monomer mixture satisfying each of the following conditions:

   comprising, as monomer m1, an alkyl (meth)acrylate represented by the following formula (I):

$$CH_2=C(R^1)COOR^2 \qquad (I)$$

   wherein $R^1$ is a hydrogen atom or a methyl group and $R^2$ is an alkyl group having 1 to 20 carbon atoms; and comprising, as monomer m2, an unsaturated monomer containing an oxazoline group in an amount of 1 to 70 % by weight of all monomer components.

2. The pressure-sensitive adhesive composition according to Claim 1, wherein the monomer mixture is essentially free of carboxyl-group-containing monomers.

3. The pressure-sensitive adhesive composition according to Claim 1 or 2, wherein the monomer m2 is 2-vinyl-2-oxazoline.

4. The pressure-sensitive adhesive composition according to any one of Claims 1 to 3, wherein the monomer mixture has a monomer composition such that the copolymerization product of the monomer mixture has a glass-transition temperature Tg of -10 °C or below.

5. The pressure-sensitive adhesive composition according to any one of Claims 1 to 4, further comprising a crosslinking agent.

6. A pressure-sensitive adhesive sheet, comprising a pressure-sensitive adhesive layer formed of the composition according to any one of Claims 1 to 5.

7. A method for producing a pressure-sensitive adhesive sheet, comprising:

   (A) preparing a pressure-sensitive adhesive composition by subjecting a monomer mixture to copolymerization reaction, with the monomer mixture satisfying each of the following conditions:

   comprising, as monomer m1, an alkyl (meth)acrylate represented by the following formula (I):

$$CH_2=C(R^1)COOR^2 \qquad (I)$$

   wherein $R^1$ is a hydrogen atom or a methyl group and $R^2$ is an alkyl group having 1 to 20 carbon atoms; and comprising, as monomer m2, an unsaturated monomer containing an oxazoline group in an amount of 1 to 70 % by weight of all monomer components;

   (B) applying the composition to a substrate; and
   (C) curing the applied composition to form a pressure-sensitive adhesive layer.

8. The pressure-sensitive adhesive sheet production method according to Claim 7, wherein the monomer mixture is essentially free of carboxyl-group-containing monomers.

9. The pressure-sensitive adhesive sheet production method according to Claim 7 or 8 **characterized by** carrying out the copolymerization reaction partially by photopolymerization.

10. The pressure-sensitive adhesive sheet production method according to Claim 7 or 8 **characterized by** carrying out the copolymerization reaction by solution polymerization.

FIG.1

11

3
2
1
2
3

FIG.2

12

2
1
2
3

FIG.3

13

3
2
3

FIG.4

14

2
3

FIG.5

15

3
2
1

FIG.6

16

2
1

FIG.7

## INTERNATIONAL SEARCH REPORT

| | International application No. |
|---|---|
| | PCT/JP2010/072971 |

### A. CLASSIFICATION OF SUBJECT MATTER

$C09J133/06(2006.01)i$, $C08F2/46(2006.01)i$, $C08F220/18(2006.01)i$, $C08F226/06(2006.01)i$, $C08J7/06(2006.01)i$, $C09J7/02(2006.01)i$, $C09J139/04(2006.01)i$

According to International Patent Classification (IPC) or to both national classification and IPC

### B. FIELDS SEARCHED

Minimum documentation searched (classification system followed by classification symbols)
C09J1/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-124640 A (Nippon Shokubai Co., Ltd.),<br>18 May 2006 (18.05.2006),<br>claims; examples; paragraphs [0015], [0030],<br>[0038]<br>(Family: none) | 1-8,10<br>9 |
| X<br>Y | JP 8-060117 A (Nippon Shokubai Co., Ltd.),<br>05 March 1996 (05.03.1996),<br>claims; examples; paragraphs [0014], [0023],<br>[0032]<br>(Family: none) | 1-8,10<br>9 |
| X<br>Y | JP 10-316954 A (Nippon Shokubai Co., Ltd.),<br>02 December 1998 (02.12.1998),<br>claims; examples; paragraphs [0013], [0030],<br>[0028]<br>(Family: none) | 1-8,10<br>9 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 24 February, 2011 (24.02.11) | 08 March, 2011 (08.03.11) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2010/072971 |

C (Continuation).  DOCUMENTS CONSIDERED TO BE RELEVANT

| Category* | Citation of document, with indication, where appropriate, of the relevant passages | Relevant to claim No. |
| --- | --- | --- |
| X<br>Y | WO 2008/103008 A1  (HAEUM CHEMTEC CO., LTD.),<br>28 August 2008 (28.08.2008),<br>pages 14 to 29, 10 to 11<br>& KR 831081 B1          & CN 101541907 A<br>& TW 200904926 A | 1-4,6-8,10<br>5,9 |
| X<br>Y | WO 2009/002083 A2  (HAEUN CHEMTEC CO., LTD.),<br>31 December 2008 (31.12.2008),<br>pages 17 to 43<br>& KR 2008-113709 A      & TW 200922407 A | 1-4,6-8,10<br>5,9 |
| X<br>Y | JP 4-216888 A  (MINNESOTA MINING & MFG CO.),<br>06 August 1992 (06.08.1992),<br>claims; examples; paragraphs [0023], [0025]<br>& US 4968562 A          & EP 444354 A<br>& AU 9169283 A          & CA 2032766 A<br>& BR 9100129 A          & DE 69026927 A<br>& ES 2086385 A | 1,2,4-9<br>3,10 |
| X | JP 1-221402 A  (Nippon Shokubai Co., Ltd.),<br>04 September 1989 (04.09.1989),<br>claims; examples; page 3, lower left column;<br>page 5, upper left column<br>& EP 320594 A1          & US 5087603 A | 1-8 |
| X | JP 2-150482 A  (Nippon Shokubai Co., Ltd.),<br>08 June 1990 (08.06.1990),<br>claims; examples; page 3, upper right column;<br>page 5, upper left column<br>(Family: none) | 1-8 |
| X | JP 2-155977 A  (Nippon Shokubai Co., Ltd.),<br>15 June 1990 (15.06.1990),<br>claims; examples; page 3, lower left column<br>(Family: none) | 1-8 |
| Y | WO 2009/031421 A1  (DIC Corp.),<br>12 March 2009 (12.03.2009),<br>paragraphs [0033], [0071], [0068], [0095]<br>& TW 200920808 A | 3,5,9,10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009294491 A
- JP H5117593 B
- JP 2003183596 A
- JP 2003165964 A

**Non-patent literature cited in the description**

- Handbook of Pressure Sensitive Adhesive Technology. Polymer Handbook. Nikkan Kogyo Shimbun Ltd,
- Polymer Handbook. Wiley-Interscience